(19) **Europäisches Patentamt**

**European Patent Office**

**Office européen des brevets**

(11) **EP 0 890 841 B1**

(12) **EUROPÄISCHE PATENTSCHRIFT**

(45) Veröffentlichungstag und Bekanntmachung des Hinweises auf die Patenterteilung:
**05.02.2003 Patentblatt 2003/06**

(51) Int Cl.7: **G01P 3/48**, G01P 3/44, H02P 7/05

(21) Anmeldenummer: **98112345.8**

(22) Anmeldetag: **03.07.1998**

(54) **Verfahren zum Ermitteln der Drehzahl bei mechanisch kommutierten Gleichstrommotoren**

Method for determining the rotation speed of mechanically commutated DC motors

Procédé pour la détermination de la vitesse de rotation de moteurs à courant continu à commutation mécanique

(84) Benannte Vertragsstaaten:
**DE ES FR GB IT SE**

(30) Priorität: **09.07.1997 DE 19729238**

(43) Veröffentlichungstag der Anmeldung:
**13.01.1999 Patentblatt 1999/02**

(73) Patentinhaber: **Conti Temic microelectronic GmbH**
**90411 Nürnberg (DE)**

(72) Erfinder:
• **Kessler, Erwin**
**88348 Saulgau (DE)**

• **Schulter, Wolfgang, Dr.**
**88709 Meersburg (DE)**

(56) Entgegenhaltungen:
**EP-A- 0 689 054        US-A- 5 181 232**

• **BIRK M: "UNKONVENTIONELLE DREHZAHLMESSUNG UND -REGELUNG BEI GLEICHSTROMMOTOREN. SWITCHED-CAPACITOR-FILTER BESTIMMT DREHZAHL AUS DER WELLIGKEIT" ELEKTRONIK, Bd. 33, Nr. 25, Dezember 1984, Seiten 71-72, XP002029304 München DE**

**Beschreibung**

Die Erfindung betrifft ein Verfahren zum Ermitteln der Drehzahl und/oder der Wegstrecke bei mechanisch kommutierten Gleichstrommotoren gemäß dem Oberbegriff des Patentanspruchs 1. Derartige Verfahren sind bspw. der EP 0 689 054 A1, EP 0 730 156 A1 sowie der DE 39 35 585 A1 zu entnehmen.

Es ist allgemein bekannt, den Wechselanteil des Stromes, die welligkeit oder gemäß dem englischen Begriff Ripple genannt, von Gleichstrommotoren als Maß für die Drehzahl des Motors zu erfassen, auszuwerten und auszunutzen. in der DE 35 27 906 A1 wird beispielsweise ein sogenanntes Nulldurchgangsverfahren beschrieben, bei dem nach Elimination des Gleichanteils die Nulldurchgänge des Stromes erfaßt werden.

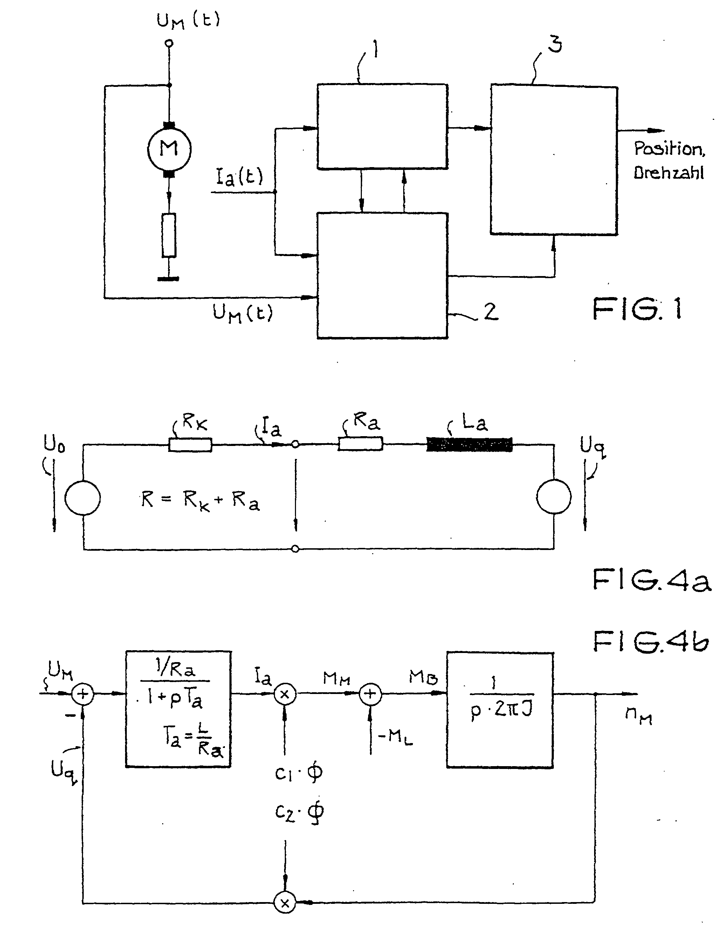

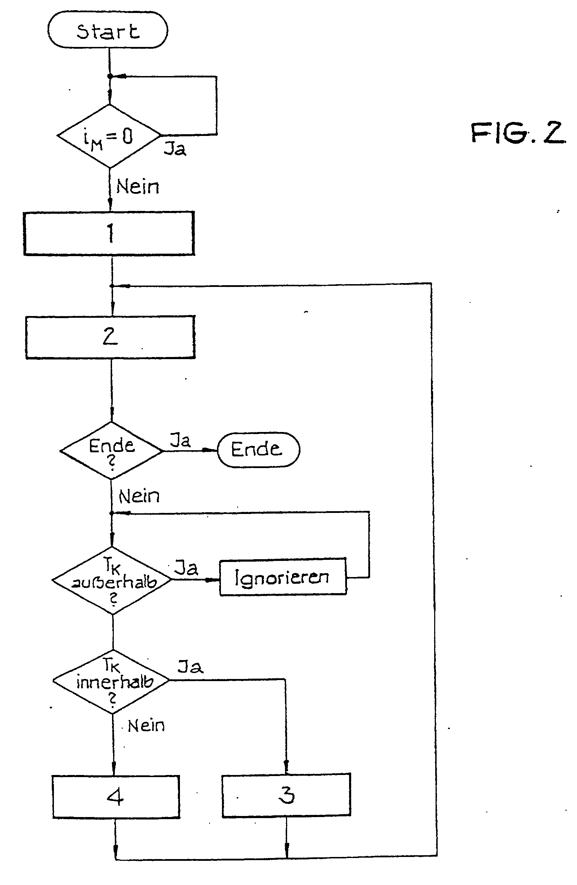

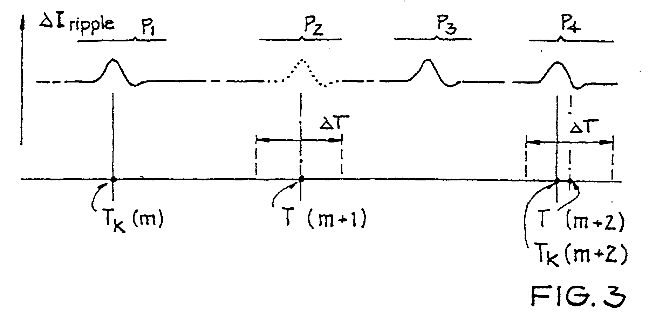

Bekannt ist außerdem, daß das Verhalten von Gleichstrommotoren mittels eines elektromechanischen Motorzustandsmodells basierend auf den Motorengleichungen beschrieben werden kann, wie es in Fig. 4a und 4b dargestellt ist. Die Motorengleichung $U_q(t) = c·\Phi·n(t)$, auch Generatorgleichung genannt, die Motorengleichung $M_m(t) = c_1 · \Phi · I_a(t)$ sowie der elektrische Zusammenhang $U_q(t) = U_M(t) - I_a(t)·R_a - L · \frac{\partial I_a(t)}{\partial t}$ können ebenfalls der Literatur, bspw. Lindner u.a.: Nachschlagewerk Elektrotechnik - Elektronik, Leipzig, 2. Aufl. 1983, S. 199 ff. entnommen werden. Die Bezugszeichen (vgl. Fig. 4 a, b und auch die Gleichungen) sind entsprechend analog gewählt und bedeuten im einzelnen $U_q$ die induzierte Ankerspannung ; c, $c_1$, $c_2$ die motorspezifischen Größen, auch Motorenkonstanten genannt, $\Phi$ der magnetische Fluß, n die Drehzahl, $M_L$ das Lastmoment, $M_m$ das Motormoment und $M_B$ das sich daraus ergebende Beschleunigungsmoment, $I_a$ den Motor- bzw. Ankerstrom, $U_M$ die Motorklemmenspannung, $R_a$ den Ankerwiderstand, $R_k$ den äußeren Klemmenwiderstand, L die induktivität der Motorwicklung und J das Masse-Trägheitsmoment der gesamten rotierenden Anordnung einschließlich der zu bewegenden Teile, bspw. die Fenster.

Beim gattungsbildenden Verfahren der EP 0 689 054 A1 wird das generierte Signal der Stromwelligkeit phasenverschoben und das phasenverschobene zum nicht phasenverschobenen addiert bzw. subtrahiert, wodurch ein insbesondere von Doppelkommutierungserscheinungen befreites Signal gewonnen wird.

Auch das sogenannte ripple-count-Verfahren ist dieser Schrift zu entnehmen. Dem Aufsatz "Unkonventionelle Drehzahlmessung und -regelung bei Gleichstrommotoren" von Birk, Elektronik 25, 14.12.1984, S. 71 f. ist die inkrementale Bestimmung der Drehzahl aus der Kommutierungswelligkeit des Ankerstroms ebenfalls zu entnehmen.

Aus den oben genannten Schriften sind auch die grundsätzlichen Probleme bei der Erkennung und Auswertung der Stromwelligkeit zu entnehmen, insbesondere die Anfälligkeit gegen Störungen in der Netzspannung und Doppelkommutierungen. Der schaltungstechnische Aufwand ist bei allen Kompensationsverfahren erheblich und Störungen letztlich nicht auszuschließen.

Aufgabe der Erfindung ist es, die Verfahren gemäß des Oberbegriffs des Anspruchs 1 derart weiterzuentwickeln, daß der Aufwand der Kompensation reduziert und die Störsicherheit aufrechterhalten beziehungsweise verbessert werden kann.

Die Aufgabe ist durch die kennzeichnenden Merkmale des Patentanspruchs 1 gelöst. Vorteilhafte Weiterbildungen der Erfindung sind den Unteransprüchen zu entnehmen.

Grundgedanke ist es, mittels des Motorzustandsmodells einen zulässigen Soll-Zeitbereich zu bestimmen und die Ergebnisse der parallel dazu erfolgenden Analyse des Zeitverlaufs der Welligkeit des Motorstroms nur dann in der Auswerteeinheit zu berücksichtigen, wenn diese im Soll-Zeitbereich liegen. Die neben dem Motorstrom und der Motorspannung für das Motorzustandsmodell erforderlichen Größen werden entweder fest vorgegeben oder aber aus dem Verlauf von Motorstrom und Motorspannung abgeleitet und entsprechend angepaßt. So kann die Motorimpedanz bereits im Anlaufzeitpunkt noch vor dem Überwinden der Haftreibung bestimmt werden, da in diesem Fall die Drehzahl noch Null und keine induzierte Ankerspannung $U_q$ vorhanden ist. Durch mehrfache Erfassung von Motorstrom und Motorspannung kann der Wert der Motorimpedanz adaptiv angepaßt und Fehler so weitgehend ausgeschlossen werden. Außerdem kann die temperatur- und lastabhängige motorspezifische Größe c nach jedem Kommutierungsvorgang neu bestimmt und so für die folgende Extrapolation der Einfluß von Temparatur und Last berücksichtigt werden. Sollte die Arbeitsdauer des Motors relativ kurz sein, so kann die motorspezifische Größe c auch über die gesamte Arbeitsdauer auf dem fest vorgegebenen Wert bleiben, da insbesondere die thermische Beeinflussung demgegenüber sehr viel langsamer und schwächer abläuft.

Die Verfahrensschritte gemäß Patentanspruch 4 zeigen eine besonders einfache Umsetzung des erfindungsgemäßen Verfahrens. Dabei wird jeweils zunächst der nächste Kommutierungszeitpunkt mittels des Motorzustandsmodells extrapoliert, der Soll-Zeitbereich festgelegt und innerhalb diesem der Zeitverlauf der Stromwelligkeit beobachtet.

Ein Vorteil des erfinderischen Konzepts wird deutlich, wenn aufgrund von Störungen kein Kommutierungsvorgang erkannt werden kann. Dann steht der Auswerteeinheit nämlich noch der extrapolierte wahrscheinliche wert des nächsten Kommutierungszeitpunktes zur Verfügung.

Nach dem Erkennen eines Kommutierungsvorgangs innerhalb des zulässigen Soll-Zeitbereichs wird aus diesem neben der aktuellen Drehzahl und Drehwinkelinkrement auch die motorspezifische Größe erforderlichenfalls mit dem genauen Wert aktualisiert. Die vorzugebenden Größen, wie die motorspezifische Größe, die zumindest zum Motorstart vorgegeben, dann ggfs. adaptiv angepaßt wird, sowie eine Toleranzgröße $\Delta T$ zur Bestimmung des zulässigen Soll-Zeitbereichs um den wahrscheinlichen nächsten Kommutierungszeitpunkt $T(m+1)$, können ohne besonderen Aufwand bei der Herstellung der Motorsteuerung mit gespeichert oder für den jeweiligen Anwendungsfall definiert werden.

Das erfindungsgemäße Verfahren ergänzt die bekannten Verfahren zur Stromwelligkeitsauswertung, erhöht deren Störsicherheit und kommt insbesondere auch ohne die sonst für die Positionierungsaufgaben oftmals erforderlichen teuren Hallsensoren aus.

Die Erfindung wird nachfolgend anhand eines Ausführungsbeispiels und der Figuren näher erläutert.

Kurze Beschreibung der Figuren:

Figur 1       Schematisches Blockschaltbild einer Anordnung zur Durchführung des Verfahrens

Figur 2       Ablaufdiagramm des Verfahrens

Figur 3       Darstellung der verschiedenen möglichen Ereignisse der Stromripple

Figur 4 a & b  elektrisches und mechanisches Motorzustandsmodell gemäß dem Stand der Technik

Fig. 1 zeigt in einem schematischen Blockschaltbild eine Anordnung zur Durchführung des Verfahrens. Vom Motor M werden die Motorspannung $U_M$(t) sowie über einen Meßwiderstand der Motorstrom $I_a$(t) erfaßt. Der Motorstrom $I_a$(t) wird einerseits dem sogenannten Ripple Detektor 1, einer Anordnung zur Erkennung der Kommutierung aus der welligkeit des Motorstroms $I_a$(t), zugeführt, andererseits auch dem Motorzustandsmodell 2, welches darüber hinaus noch die Motorspannung $U_M$(t) erfaßt. Ripple Detektor 1 und Motorzustandsmodell 2 sind wechselseitig miteinander verbunden und tauschen einerseits die extrapolierten, andererseits die aus dem Motorstrom $I_a$(t) real detektierten Ergebnisse aus. So gibt das Motorzustandsmodell 2 dem Ripple Detektor 1 jeweils den Soll-Zeitbereich $T(m+1)\pm\Delta T$ für den folgenden Kommutierungsvorgang $T_k(m+1)$ vor. Dabei wird über die Umdrehungszahl m jeweils eine Umdrehung erfaßt. Falls dieser Kommutierungsvorgang $T_k(m+1)$ zuverlässig und innerhalb des Soll-Zeitbereichs $T(m+1)\pm\Delta T$ erkannt wird, werden entsprechend diesem Zeitpunkt $T_k(m+1)$ die daraus ableitbare aktuelle Drehzahl n(t) und die motorspezifische Größe c angepaßt, falls aufgrund von einer Abweichung erforderlich.

Außerdem sind der Ripple Detektor 1 und das Motorzustandsmodell 2 jeweils mit der Auswerteeinheit 3 verbunden, die die im Motorzustandsmodell extrapolierte Drehzahl $n_M$(t) und den Soll-Zeitbereich $T(m+1)$ $\pm\Delta T$ mit der aus dem Motorstrom Ia(t) ermittelten Drehzahl n(t) vergleicht und entsprechend aus der jeweils wahrscheinlicheren Größe die Ausgangswerte Drehzahl n und Drehwinkel $\varphi$ bereitstellt.

In Fig. 2 ist mittels eines Flußdiagramms der Ablauf des Verfahrens visualisiert. Mit dem Anschluß an eine Versorgungsspannung wird der Ablauf automatisch gestartet und geprüft, ob ein Motorstrom vorliegt. Der Motorstrom dient dabei zunächst zur Erkennung der Aktivierung des Motors.

Wird der Motor eingeschaltet und fließt somit ein Motorstrom, wird zunächst der Stromanstieg noch vor dem Überwinden der Haftreibung gemessen und die Motorimpedanz bestimmt, zumindest aber der ohmsche Anteil gemäß der Gleichung $R = U_M / I_a$ in der Nähe des Umkehrpunktes, da vor dem Überwinden der Haftreibung ja keine Ankerspannung $U_q$ induziert wird und der induktive Anteil vernachlässigbar klein gegenüber R ist. Diese Stromanstiegsauswertung wird in Fig. 2 durch den Block 1 dargestellt.

Mit der Überwindung des Haftreibungsmoments wird durch den sich nunmehr drehenden Anker eine Spannung induziert, die gemäß der Formel $U_q(t) = U_M(t) - I_a(t) \cdot R - L \cdot \frac{\partial I_a(t)}{\partial t}$ aus dem Motorstrom Ia(t) und der Motorspannung $U_M$(t) permanent abgeleitet werden kann und die sich bei vernachlässigbarer Induktivität L noch weiter vereinfacht. Daraus kann gemäß $U_q(t) \approx c \cdot n_M(t)$ zunächst die wahrscheinliche Drehzahl $n_m$ abgeschätzt werden. Aus der wahrscheinlichen Drehzahl $n_M$(t) wird dann der Soll-Zeitbereich $T(m+1) \pm \Delta T$ der nächsten Kommutierung $T_k(m+1)$ abgeleitet. Dies erfolgt im Block 2 der Fig. 2. Als motorspezifische Größe c wird für den ersten Kommutierungsvorgang ein vorgegebener Wert verwendet, der jedoch nach dem Erkennen der ersten Kommutierung jeweils konkretisiert wird.

Außerdem wird geprüft, ob ein der Drehzahl n entsprechendes Drehwinkelinkrement noch auftreten kann oder bereits das Ende des Vorstellweges überschritten wird. in diesem Fall wird der Motor abgeschaltet.

Im folgenden wird der Motorstrom Ia(t) mittels des Ripple Detektors 1 (vgl. Fig. 1) überwacht. Die Auswerteeinheit 3 gemäß Fig. 1 beobachtet dabei, ob der Ripple Detektor 1 bereits außerhalb des Soll-Zeitbereichs $T(m+1) \pm \Delta T$ der nächsten Kommutierung $T_k(m+1)$ Stromspitzen detektiert und ignoriert diese, da sie auf externe Störungen des Motorstroms Ia(t), bspw. durch Zuschalten anderer Lasten ins versorgungsnetz, zurückzuführen sind.

Tritt innerhalb des Soll-Zeitbereichs $T(m+1) \pm \Delta T$ ein detektierbarer Stromripple auf, so wird dieser als der nächste Kommutierungsvorgang $T_k(m+1)$ erkannt. Wie durch den Block 3 in Fig. 2 angedeutet werden soll, wird nun einerseits zunächst die Drehzahl konkret ermittelt und das Drehwinkelinkrement zur Positionszählung für diesen Zeitpunkt gesetzt. Außerdem kann auf Basis des detektierten Kommutierungsvorgangs und der aktuellen Drehzahl die motorspezifische Größe c neu ermittelt und für die nachfolgende Berechnung angepaßt werden. Dadurch kann das Verfahren an sich verändernde Motorbedingungen, sehr unterschiedliche Vorstellgeschwindigkeiten und Laständerungen oder an Erwärmungen während des Betriebs, angepaßt werden.

Wird jedoch, bspw. aufgrund einer Störung, kein Stromripple detektiert, so wird statt dessen die wahrscheinliche Drehzahl $n_m$ und der daraus abgeleitete wahrscheinliche Kommutierungszeitpunkt T(m+1) angenommen. Dies soll in Fig.2 mit Block 4 angedeutet werden. Drehzahl und Drehinkrement werden entsprechend angepaßt und beim Auftreten des nächsten detektierbaren Stromripples konkretisiert.

Wieder wird aus Strom und spannung die wahrscheinliche Drehzahl und der nächste Kommutierungsvorgang abgeleitet und der Vorgang wiederholt, bis das Ende des Vorstellweges erreicht ist.

Durch das Verfahren kann somit sichergestellt werden, daß die Auswerteeinheit die Position und Drehzahl zuverlässig weitergeben und Doppelkommutierungen etc. abgrenzen kann.

Fig. 3 stellt nun in Periode $P_1$ dar, wie aus einem sauber detektierbaren Stromripple der Kommutierungszeitpunkt $T_k(m)$ bestimmt wird. So wird insbesondere auch der erste Kommutierungszeitpunkt bestimmt, auf Basis dessen nachfolgend die motorspezifische Größe c aktuell bestimmt und der nachfolgende wahrscheinliche Kommutierungszeitpunkt T(m+1) extrapoliert wird.

In Periode $P_2$ wird nun der Fall dargestellt, wenn kein bzw. kein sauber detektierbarer Stromripple (angedeutet durch den punktierten Funktionsverlauf) innerhalb des Soll-Zeitbereichs T(m+1) $\pm \Delta$T erkannt wird. Dann wird der wahrscheinliche Kommutierungszeitpunkt T (m+1) verwendet (vgl. Fig. 3: Punktmarkierung auf der Zeitachse gibt den übernommenen Kommutierungszeitpunkt an).

Tritt, wie in Periode $P_3$ dargestellt, ein Stromripple außerhalb des sollzeitbereichs T(m+1) $\pm \Delta$T auf, so wird dieser ignoriert (es ist kein Punkt auf der Zeitachse dargestellt).

Ein innerhalb des Soll-Zeitbereichs T(m+2) $\pm \Delta$T auftretender Stromripple wird als nächster Kommutierungszeitpunkt $T_k$ (m+2) auch dann erkannt, wenn er vom extrapolierten, wahrscheinlichen T (m+2) abweicht, wie in Periode $P_4$ gezeigt. Es wird der detektierte Kommutierungszeitpunkt $T_k$ (m+2) für die folgende Extrapolation verwandt.

**Patentansprüche**

1. Verfahren zum Ermitteln der Drehzahl (n) und/oder des Drehwinkels ($\varphi$) bei mechanisch kommutierten Gleichstrommotoren aus dem Zeitverlauf der bei der Kommutierung auftretenden Welligkeit (Ripple) des Motorstroms ($I_a(t)$), indem

a) der Zeitverlauf der Welligkeit des Motorstroms ($I_a(t)$) erfaßt, die Zeitpunkte der Kommutierung ($T_k$) bestimmt und daraus in einer Auswerteeinheit (3) die Drehzahl (n) und/oder der Drehwinkel ($\varphi$) abgeleitet wird, **dadurch gekennzeichnet, daß**

b) parallel zur Erfassung der Welligkeit des Motorstroms ($I_a(t)$) von einem Motorzustandsmodell, dem die elektromechanischen Motorengleichungen zugrunde liegen, aus dem Motorstrom ($I_a(t)$) und der Motorspannung ($U_M(t)$) ein zulässiger Soll-Zeitbereich (T(m)$\pm \Delta$T) bestimmt wird,

c) die Zeitpunkte der Kommutierung ($T_k(m)$), nur dann von der Auswerteeinheit (3) berücksichtigt werden, wenn diese im zulässigen Soll-Zeitbereich (T(m)$\pm \Delta$T) liegen und

d) falls innerhalb des zulässigen Soll-Zeitbereichs (T(m)$\pm \Delta$T) keine Welligkeit einer Kommutierung zugeordnet werden kann, die Auswerteeinheit (3) einen wahrscheinlichen Kommutierungszeitpunkt (T(m)) für diesen soll-Zeitbereich (T(m)$\pm \Delta$T) aus dem Motorzustandsmodell extrapoliert.

2. Verfahren nach Anspruch 1, **dadurch gekennzeichnet, daß** zumindest der ohmsche Anteil der Motorimpedanz im Anlaufzeitpunkt bestimmt wird, indem zumindest einmal vor dem Überwinden der Haftreibung der Motorstrom ($I_a$) und die Motorspannung ($U_M$) bestimmt werden.

3. Verfahren nach Anspruch 2, **dadurch gekennzeichnet, daß** vor dem Überwinden der Haftreibung Motorstrom und Motorspannung mehrfach erfaßt werden und aus den Meßwerten von Motorstrom und Motorspannung vorzugsweise der Wert der Motorimpedanz, zumindest aber dessen ohmscher Anteil R adaptiv angepaßt wird.

4. Verfahren nach Anspruch 1, **gekennzeichnet durch** folgende Verfahrensschritte:

a) mit dem Anstieg des Motorstroms bzw. der Motorspannung werden noch vor dem Überwinden der Haftreibung Motorstrom $I_a(t)$ und Motorspannung $U_M(t)$ mehrfach erfaßt und die Werte vorzugsweise der Motorimpedanz, zumindest aber dessen ohmscher Anteil R adaptiv angepaßt,

b) der Motorstrom $I_a(t)$ und die Motorspannung $U_M(t)$ vorzugsweise kontinuierlich, zumindest aber in der Nähe vom Kommutierungszeitpunkt, erfaßt werden,

c) im Motorzustandsmodell wird gemäß der vereinfachten Motorengleichung $U_q(t)=U_M(t)-I_a(t) \cdot R - L \cdot \frac{\partial I_a(t)}{\partial t}$ die induzierte Ankerspannung $U_q(t)$ als zur Drehzahl proportionale Größe bestimmt und gemäß der Gleichung $U_q(t) \approx c \cdot n_M(t)$ die wahrscheinliche Drehzahl $n_M(t)$ extrapoliert, wobei c eine motorenspezifische Größe ist, die

c1) aus der bisherig aus den Kommutierungen ermittelten aktuellen Drehzahl n(t) sowie dem Motorstrom $I_a(t)$ und der Motorspannung $U_M(t)$ gemäß der Gleichung

$$c(t) = \frac{U_M(t) - I_a(t) \cdot R - L \cdot \dfrac{\partial I_a(t)}{\partial t}}{n(t)}$$

angepaßt, wobei L die Induktivität der Motorwicklung ist,

c2) oder, vorzugsweise nur zum Motorstart, fest vorgegeben wird,

d) aus der wahrscheinlichen Drehzahl $n_M(t)$ wird der Soll-Zeitbereich $T(m+1) \pm \Delta T$ der nächsten Kommutierung $T_k(m+1)$ gemäß der Gleichung $T(m+1)=T_k(m)+1/n_M(t)$ vorgegeben, wobei $\Delta T$ eine vorgegebene Toleranzgröße und $T(m+1)$ der wahrscheinliche nächste Kommutierungszeitpunkt ist,

e) im Soll-Zeitbereich $T(m+1) \pm \Delta T$ wird der Zeitverlauf der Welligkeit des Motorstroms $I_a(t)$ beobachtet und

e1) entweder die in diesem Zeitintervall auftretende Welligkeit als zulässiger Kommutierungsvorgang $T_k(m+1)$ erkannt, daraus die aktuelle Drehzahl $n(t) = n(T_k(m+1)) = 1/(T_k(m+1)-T_k(m))$ sowie das Inkrement des Drehwinkels $\varphi(t)=\varphi(T_k(m+1)=\varphi(T_k(m))+1=m+1$ von der Auswerteeinheit weitergegeben und die motorenspezifische Größe c als $c(T_k(m+1))$ auf Basis von n(t) gemäß Schritt c1) angepaßt wird, oder

e2) falls im Soll-Zeitbereich $T(m+1) \pm \Delta T$ kein zulässiger Kommutierungsvorgang $T_k(m+1)$ erkannt wird, die extrapolierte wahrscheinliche Drehzahl $n_M(T(m+1))$ sowie zum wahrscheinlichen Zeitpunkt $T(m+1)=1/n_M(T(m+1))+T_k(m)$ das Inkrement des Drehwinkels $\varphi(t)= \varphi(T_k(m))+1 = m + 1$ von der Auswerteeinheit (3) weitergegeben wird sowie

f) alle außerhalb des Soll-Zeitbereichs $T(m+1) \pm \Delta T$ auftretenden Welligkeiten ignoriert und die Verfahrensschritte b) bis e) wiederholt werden.

5. Verwendung der voranstehenden Verfahren insbesondere zur Positionsermittlung und -steuerung bei elektromotorisch betriebenen Teilen durch Inkrementierung der Drehwinkel von einem einer ersten Ruheposition zugeordneten Nullwert aus, insbesondere auch zur Erkennung von Einklemmfällen bei gleichzeitig noch nicht erreichter zweiter Ruheposition.

## Claims

1. A method of determining the rotational speed (n) and/or the angle of rotation ($\varphi$) of mechanically commutated dc motors from the waveform of the waviness (ripple) of the motor current ($I_a(t)$) occurring during the commutation process, wherein

   a) the waveform of the ripple of the motor current ($I_a(t)$) is detected, the time point of the commutation ($T_k$) is determined and the rotational speed (n) and/or the angle of rotation ($\varphi$) is derived therefrom in an evaluating unit (3), **characterised in that**

   b) in parallel with the detection of the ripple of the motor current ($I_a(t)$) by a motor state model that is based upon the electromechanical motor equations, a permissible reference time zone ($T(m) \pm \Delta T$) is determined from the motor current ($I_a(t)$) and the motor voltage ($U_M(t)$),

   c) the time points of the commutation ($T_k(m)$) are only taken into account by the evaluating unit (3) when these lie in the permissible reference time zone ($T(m) \pm \Delta T$) and

   d) in the event that no ripples can be associated with a commutation within the permissible reference time zone ($T(m) \pm \Delta T$), the evaluating unit (3) extrapolates a probable commutation time point (Tm)) for this reference time zone ($T(m) \pm \Delta T$) from the motor state model.

2. A method in accordance with Claim 1, **characterised in that** at least the ohmic component of the motor impedance is determined at the starting time point, **in that** the motor current ($I_a$) and the motor voltage ($U_M$) are determined at least once prior to the static friction being overcome.

3. A method in accordance with Claim 2, **characterised in that** the motor current and the motor voltage are detected several times prior to the static friction being overcome and preferably the value of the motor impedance or at least the ohmic component R thereof is adjusted adaptively from the measured values of the motor current and the motor voltage.

**4.** A method in accordance with Claim 1, **characterised by** the following method steps:

a) during the rise of the motor current or the rise of the motor voltage, the motor current $I_a(t)$ and the motor voltage $U_M(t)$ are detected several times prior to the static friction being overcome and the values of preferably the motor impedance, or at least the ohmic component R thereof, are adjusted adaptively,

b) the motor current $I_a(t)$ and the motor voltage $U_M(t)$ are preferably detected continuously or at least in the vicinity of the commutation time point,

c) the induced armature voltage $U_q(t)$ is determined in the form of a magnitude proportional to the rotational speed in the motor state model in accordance with the simplified motor equation

$$U_q(t) = U_M(t) - I_a(t) \cdot R - L \cdot \frac{\partial I_a(t)}{\partial t}$$

and the probable rotational speed $n_M(t)$ is extrapolated in accordance with the equation $U_q(t) \approx c \cdot n_M(t)$, where c is a magnitude specific to the motor, which

c1) is adjusted from the previous actual rotational speed n(t) determined from the commutations and also from the motor current $I_a(t)$ and the motor voltage $U_M(t)$ in accordance with the equation

$$c(t) = \frac{U_M(t) - I_a(t) \cdot R - L \cdot \frac{\partial I_a(t)}{\partial t}}{n(t)}$$

wherein L is the inductance of the motor winding,
c2) or, is preferably only firmly defined when the motor starts,

d) the reference time zone $(T(m+1)\pm\Delta T)$ for the next commutation $T_k(m+1)$ is predetermined from the probable rotational speed $n_M(t)$ in accordance with the equation $T(m+1) = T_k(m) + 1/n_M(t)$, wherein $\Delta T$ is a predefined tolerance magnitude and $T(m+1)$ is the probable next commutation time point,

e.) the waveform of the ripple of the motor current $I_a(t)$ is observed in the reference time zone $T(m+1)\pm\Delta T$ and

e1) either the ripple occurring in this time interval is recognised as a permissible commutation process $T_k(m)$ from which the actual rotational speed $n(t) = n(T_k(m+1)) = 1 / (T_k(m + 1) - (T_k(m))$ and also the increment of the rotational angle $\varphi(t) = \varphi(T_k(m+1)) = \varphi(T_k(m)) + 1 = m + 1$ are passed on by the evaluating unit and the magnitude c specific to the motor is adjusted in the form of $c(T_k(m+1))$ on the basis of n(t) in accordance with step c1), or

e2) in the event that no permissible commutation process $T_k(m+1)$ is recognised in the permissible reference time zone $T(m+1) \pm\Delta T$, the extrapolated probable rotational speed $n_M(T(m+1))$ and also the increment of the rotational angle $\varphi(t) = \varphi(T_k(m)) + 1 = m+1$ at the probable commutation time point $T(m+1) = 1 / n_M(T(m+1)) + T_k(m)$ are passed on by the evaluating unit (3) and

f) all of the ripples occurring outside the reference time zone $T(m+1) \pm \Delta T$ are ignored and the method steps b) to e) are repeated.

**5.** The use of the preceding method especially for determining and controlling the position of parts that are driven by electrical motors by incrementing the rotational angle from a zero value associated with a first rest position, and especially too, for detecting cases of jamming at times when a second rest position has not yet been reached.

**Revendications**

**1.** Procédé de détermination de la vitesse de rotation (n) et/ou de l'angle de rotation (φ) dans des moteurs à courant continu à commutation mécanique à partir du déroulement dans le temps de l'ondulation (Ripple) du courant de moteur ($I_a(t)$) apparaissant lors de la commutation, dans lequel

a) le déroulement dans le temps de l'ondulation du courant de moteur ($I_a(t)$) est saisi, les instants de la commutation ($T_k$) sont déterminés et à partir de là, la vitesse de rotation (n) et/ou l'angle de rotation (φ) sont dérivés dans une unité d'évaluation (3),
**caractérisé en ce que**
b) parallèlement à la saisie de l'ondulation du courant de moteur ($I_a(t)$) par un modèle d'état de moteur basé sur les équations électromécaniques de moteur, on détermine à partir du courant de moteur ($I_a(t)$) et de la tension de moteur ($U_M(t)$) une plage de temps de consigne (Tm ± ΔT) admissible,

c) les instants de la commutation ($T_k(m)$) ne sont pris en considération par l'unité d'évaluation que si ceux-ci se situent dans la plage de temps de consigne (Tm ± ΔT) admissible, et

d) au cas où dans la plage de temps de consigne (Tm ± ΔT) admissible, on ne peut associer aucune ondulation à une commutation, l'unité d'évaluation (3) extrapole à partir du modèle d'état du moteur un instant de commutation (T(m)) probable pour cette plage de temps de consigne (Tm ± ΔT).

2. Procédé selon la revendication 1, **caractérisé en ce qu'**au moins la part ohmique de l'impédance du moteur est déterminée à l'instant du lancement, en déterminant le courant du moteur ($I_a$) et la tension du moteur ($U_M$) au moins une fois avant de surmonter la friction d'adhérence.

3. Procédé selon la revendication 2, **caractérisé en ce qu'**avant de surmonter la friction d'adhérence, le courant du moteur et la tension du moteur sont saisis à plusieurs reprises, et à partir des valeurs mesurées du courant du moteur et de la tension du moteur, on adapte de manière autoadaptative de préférence la valeur de l'impédance du moteur ou au moins sa part ohmique R.

4. Procédé selon la revendication 1, **caractérisé par** les étapes suivantes :

a) avec l'augmentation du courant du moteur ou de la tension du moteur, on saisit encore à plusieurs reprises le courant du moteur ($I_a(t)$) et la tension du moteur $U_M(t)$ avant de surmonter la friction d'adhérence, et les valeurs de préférence de l'impédance du moteur sont adaptées de manière autoadaptative à sa part ohmique R,

b) le courant du moteur $I_a(t)$ et la tension du moteur $U_M(t)$ sont saisis de préférence de manière continue, mais au moins à proximité de l'instant de commutation,

c) dans le modèle d'état de moteur, on détermine, selon l'équation simplifiée de moteur $U_q(t) = U_M(t) - I_a(t) \cdot R - L \cdot [\delta I_a(t)/\delta t]$, la tension d'induit $U_q(t)$ en tant que donnée proportionnelle à la vitesse de rotation, et selon l'équation $U_q(t) \approx c \cdot n_M(t)$ on extrapole la vitesse de rotation $n_M(t)$ probable, c étant une grandeur spécifique au moteur, qui

c1) est adaptée à partir de la vitesse de rotation n(t) actuelle déterminée jusqu'à présent à partir des commutations ainsi qu'à partir du courant de moteur $I_a(t)$ et de la tension de moteur $U_M(t)$ selon l'équation

$$c(t) = \{U_M(t) - I_a(t) \cdot R - L \cdot [\delta I_a(t)/\delta t]\}/\{n(t)\}$$

dans laquelle L est l'inductivité de l'enroulement moteur,

c2) ou est prédéterminée de manière fixe, de préférence seulement au démarrage du moteur,

d) à partir de la vitesse de rotation probable $n_M(t)$, on impose la plage de temps de consigne $T(m+1) \pm \Delta T$ de la commutation suivante $T_k(m+1)$ selon l'équation $T(m+1) \pm \Delta T = T_k(m) + 1/n_M(t)$, ΔT étant une grandeur de tolérance et $T(m+1)$ étant l'instant de commutation probable suivant,

e) dans la plage de temps de consigne $T(m+1) \pm \Delta T$, le déroulement dans le temps de l'ondulation du courant de moteur $I_a(t)$ est observé, et

e1) soit l'ondulation apparaissant dans cet intervalle de temps est reconnue comme opération de commutation $T_k(m+1)$ admissible, la vitesse de rotation actuelle n(t) = n ($T_k(m+1) = 1/ T_k(m+1) - T_k(m)$) ainsi que l'incrément de l'angle de rotation $\varphi(t) = \varphi$ ($T_k(m+1) = \varphi(T_k(m)) + 1 = m + 1$ sont transmis par l'unité d'évaluation et la grandeur spécifique de moteur c est adaptée en tant que $c(T_k(m+1))$ sur la base de n(t) selon l'étape c1),

ou

e2) au cas où dans la plage de temps de consigne $T(m+1) \pm \Delta T$ on ne reconnaît aucune opération de commutation $T_k(m+1)$ admissible, la vitesse de rotation probable extrapolée $n_M(Tm+1)$) ainsi qu'à l'instant probable $T(m+1) = 1/n_M (T(m+1)) + T_k(m)$, l'incrément de l'angle de rotation $\varphi(t) = \varphi(T_k(m)) + 1 = m+1$ est transmis par l'unité d'évaluation (3) ainsi que

f) toutes les ondulations apparaissant en dehors de la plage de temps de consigne $T(m+1) \pm \Delta T$ sont ignorées, et les étapes de procédé b) à e) sont répétées.

5. Utilisation du procédé précédent, en particulier pour déterminer et commander la position dans des pièces fonctionnant par moteur électrique par incrémentation de l'angle de rotation depuis une valeur zéro associée à une première position de repos, en particulier aussi pour reconnaître des cas de coincement lorsqu'en même temps la deuxième position de repos n'est pas encore atteinte.

$U_M(t)$

$I_a(t)$

$U_M(t)$

1

3

Position, Drehzahl

2

# FIG. 1

$U_0$   $R_K$   $I_a$   $R_a$   $L_a$   $U_q$

$$R = R_k + R_a$$

# FIG. 4a

# FIG. 4b

$U_M$   $\dfrac{1/R_a}{1+pT_a}$   $T_a = \dfrac{L}{R_a}$   $I_a$   $M_M$   $M_B$   $\dfrac{1}{p \cdot 2\pi J}$   $n_M$

$U_q$

$-M_L$

$c_1 \cdot \phi$

$c_2 \cdot \phi$

FIG. 2

```
        ┌─────────┐
        │  Start  │
        └─────────┘
             │
             ▼
          ╱────╲
         ╱ iₘ=0 ╲────── Ja ──┐
         ╲      ╱            │
          ╲────╱             │
             │               │
           Nein              │
             ▼               │
        ┌─────────┐          │
        │    1    │          │
        └─────────┘          │
             │               │
             ▼               │
        ┌─────────┐          │
        │    2    │          │
        └─────────┘          │
             │               │
             ▼               │
          ╱──────╲           │
         ╱  Ende  ╲── Ja ──▶ ( Ende )
         ╲   ?    ╱
          ╲──────╱
             │
           Nein
             ▼
          ╱──────────╲
         ╱    T_K     ╲── Ja ──▶ ┌─────────────┐
         ╲ außerhalb  ╱          │  Ignorieren │
          ╲   ?      ╱           └─────────────┘
             │
             ▼
          ╱──────────╲
         ╱    T_K     ╲── Ja ──┐
         ╲ innerhalb  ╱        │
          ╲   ?      ╱         │
             │                 │
           Nein                │
             ▼                 ▼
        ┌─────────┐      ┌─────────┐
        │    4    │      │    3    │
        └─────────┘      └─────────┘
```

FIG. 3